# EUROPEAN PATENT APPLICATION

(11) **EP 4 733 186 A1**
(43) Date of publication of application: **29.04.2026**
(21) Application number: 24208240.2
(22) Date of filing: 22.10.2024
(51) Int. Cl.: B63B 1/10, B63B 1/12, B63B 3/14, B63B 35/44, B63B 39/06, B63H 9/068, B63B 1/14

(54) **AN UNMOORED FREE-FLOATING WIND TURBINE SYSTEM**

(71) Applicant: Huygens Beheer B.V., 8011JW Zwolle (NL)
(72) Inventor: Vermeiden, Jacob Govert, 8011JW Zwolle (NL)

(57) **Abstract**

This disclosure relates to an unmoored floating wind turbine system comprising a connecting structure that bears one or more wind turbines, and at least three hulls or topological concentrations of buoyancy-force, wherein the connecting structure is configured to transmit moments and forces between the at least three hulls and the one or more wind turbines, and at least two lifting surfaces, such as foils and/or keels and/or fins and/or hulls, wherein the at least two lifting surfaces have separately controllable orientations relative to the structure for controlling a course direction of the unmoored floating wind turbine system and for controlling a heading of the connecting structure independently from the course direction.

## Description

### FIELD OF THE INVENTION

This disclosure relates to an unmoored floating wind turbine system, in particular so such system comprising at least three hulls and at least two lifting surfaces having separately controllable orientations relative to the structure.

### BACKGROUND

Existing offshore wind turbines and land based wind turbines constitute proven technology and the presented invention aims to include proven concepts an simplify them further to decrease cost and increase reliability. Specifically, the current state of the art in wind turbines utilizes often circular masts with an axis around which the nacelle-rotor assembly rotates. This mast is configured to withstand the force-fluctuations caused by wind and rotor on one hand, and mechanical oscillations on the other hand. Subjecting such a mast-nacelle-rotor system to additional disturbances loads caused by the motion and inclination of the base of the mast when placed on a floating platform subjected to ocean waves would cause the need for stronger and stiffer masts in turn requiring thicker plating, which in turn would raise the center of gravity and thereby the motions and cost of the total system base+ mast+ nacelle+rotor.

Existing art often relies on mooring cables to provide an external force that opposes the wind force and causes the structure and with it the wind turbine rotor to align into the wind. US2024011467A1 discloses a wind turbine with floating foundation, WO2020221405A1 discloses of floating wind power plant with truss structures, US10180129B2 discloses a method for coordinated control of a floating wind turbine with three legs, CN208882060U discloses a multi fan offshore floating wind platform with truss connections between the hulls or floats; all this prior art relies at least partially on one or more mooring cable to be able to orient the rotors of the wind-turbines with respect to the wind.

Existing art often relies on mooring cables to provide an external force that opposes the wind force and causes the structure and with it the wind turbine rotor to align into the wind. Such cables are very costly in combination with electrical connection cables and require the wind turbine to remain on one location, thereby being unable to flee strong winds or alternatively seek stronger winds if no wind is present; the average capacity utilisation of offshore wind turbines therefore today never exceeds 52% for that reason. Fixed moorings also typically require permits and these permits are often associated with substantial fees for the operator. Access to the turbines once at sea is difficult and costly. A yet unmentioned but substantial challenge to floating wind solutions is to keep motion of the nacelle within narrow low bounds for a large portion of the time because existing wind turbine technology causes them to shut down at 2.5 m/s2 acceleration or whereabouts; existing solutions amount to designing floating structures with substantial water displacement and/or draught and use complex pre-tensioning systems. WO2024192038A1 is an example of such a system; US2022250722A1 and US12049766B1 are other examples.

In light of the above, there is a need in the art for a system that alleviates at least some of the problems identified above.

### SUMMARY

The appended claims define various embodiments of the unmoored floating wind turbine system disclosed herein. The technical advantages of these embodiments will be apparent from the detailed description and figures in this disclosure.

An unmoored floating wind turbine system may also be referred to as a Navigating Wind Converter and these terms are used interchangeably in this disclosure.

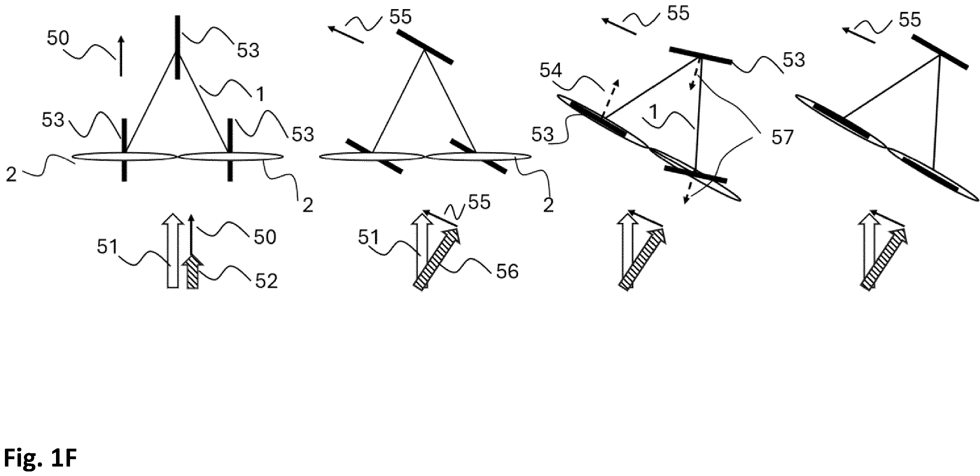

As referred to herein, course direction may be understood as the cardinal direction in which the craft translates in the water. The course direction may for example be expressed as the angle of the direction of travel of the craft in the water with the Northern direction. As referred to herein the heading is the direction that the structure is facing The heading may be expressed as a horizontal angle of the structure with the Northern direction. In a classical ship, the course direction and the heading are typically not too far off, but in the disclosed invention, the course direction and the heading are controlled independently from each other to vary the direction and speed of travel substantially independently from the heading; the latter is used to keep the wind turbines in the apparent wind that results from the combination of the true wind and the speed in the water of the system. This is explained in more detail with reference to figure 1F.

It should be appreciated that the respective orientations of the lifting surfaces are separately controllable

Preferably, the connecting structure is substantially entirely positioned above water when the system is floating on water. The connecting structure may also be referred to as the support structure.

Preferably, the system comprises an energy storage system for storing energy generated by the one or more wind turbines supported by the connecting structure.

In an embodiment, the system comprises at least two hulls configured to include a controllable lifting surface able to generate a lift force substantially perpendicular to its direction of motion in the water, said joint lift forces being able to substantially oppose the thrust of a wind-turbine, at a controllable angle or intensity.

The additional lifting surface referred to in claim 6 may also be referred to as an elevation rudder.

The truss structure referred to in claim 7 would be the connecting structure that is referred to in claim 1.

In an embodiment, the unmoored floating wind turbine system comprises wind turbines configured and controlled to have a fixed yaw orientation.

In an embodiment, the unmoored floating wind turbine system comprises a hull that is equipped with buoyancy control through ballasting in internal volumes connected through openings and operated through flow actuators and piping.

In an embodiment, the hinge referred to in claim 14 is configured in two parts that can be disassembled, with one side that includes a hollow volume open to a given direction and connected to the structure of the Navigating Wind Converter and where the hinge has a rotating part connected to a hull that is configured to include a shaft that fits inside the said hollow open volume, allowing the hull to be (dis)connected from the structure through displacement of the hinge element connected to the hull in the direction of the opening of said open volume of the hinge element connected to the structure.

In an embodiment, the unmoored floating wind turbine system comprises hoisting equipment to connect to a hull and lift a substantial part said hull above the water.

In an embodiment, the connecting structure is a truss structure including two tetrahedra that each span the full width and height of said structure, and each with four nodes in the substantially horizontal outer legs and four nodes on the inclined outer legs and three nodes in the outer substantially vertical leg, where the two said tetrahedra share truss-elements

In an embodiment, the connecting structure is a truss structure including one substantially vertical element serving as interface to the most forward hull away from the wind turbines and 3 substantially horizontal truss elements laid in a triangle connecting to the top of said vertical element and to two most forward truss nodes of the sloping truss structure, providing strength and stiffness to the interface of the most forward hull and ability to withstand the moments and forces originating and transmitted to that hull from the rest of the system.

In an embodiment, the unmoored floating wind turbine system comprises at least one industrial working surface positioned at least partially symmetrically over the said horizontal truss elements close to the hull away from the wind turbines.

In an embodiment, the unmoored floating wind turbine system comprises containerized or modular technical or chemical transformation units utilising electrical energy produced on the system resting on the said industrial working surface.

In an embodiment, the unmoored floating wind turbine system comprises containerized or modular piping and connection elements to lead electricity, goods and liquids to and from the technical or chemical transformation units.

In an embodiment, the unmoored floating wind turbine system comprises containerized or modular storage units stored on an industrial working surface .

In an embodiment, the unmoored floating wind turbine system comprises a movable crane to move storage containers, connection containers or technical chemical containers to or from a fixed point on an industrial working surface where an external crane can lift them or deposit them.

In an embodiment, the unmoored floating wind turbine system comprises a fluid tank to store produced or needed chemicals with respect for the utilisation of electrical energy.

In an embodiment, the unmoored floating wind turbine system comprises a rotatable cane or tube that includes a flexible tube to connect to a ship or dock storage system to load or unload liquids.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
Fig 1A depicts a perspective view of an embodiment of the Navigating Wind Converter taken in absence of water, globally from a upper side-view with respect of the direction of motion in the water
Fig 1B depicts a near top view of an embodiment of the Navigating Wind Converter taken in absence of water, and include an illustration of a lifting surface generating force in the water flow that opposes at least partially the force exerted by a wind turbine
Fig 1C depicts the underwater elements of an embodiment of a Navigating Wind Converter as a whole as would be seen by an observer underwater in the absence of water, and includes pictorial illustration of forces generated by the marine turbines as well as rotation motion of the hulls with respect to the structure
Fig 1D depicts a close-up of a Navigating Wind Converter's Small Waterplane Area Hull as seen slightly from the side and slightly from under and details some external elements
Fig 1E depicts the inner topology and some inner elements of an embodiment of a Small Waterplane Area Hull of an embodiment of a Navigating Wind Converter through a section view of its lower part
Fig 1F depicts the orientation action of the system to change the course from downwind to a broad reach with a sideways component while rotating the structure in the direction of the resulting apparent wind
Fig 2A is an oblique top view of an embodiment of a Navigating Wind Converter configured with a main structure (1) connecting hulls (3) and wind turbines (not visible), where the top part of said hulls has been left out and buoyancy chambers (24), (25) and (26) in each of the hulls are visible or indicated
Fig 2B is a side view of an embodiment of a Navigating Wind Converter configured with a hull (3) configured to be connected to the main structure (1) by a hinge (27) displayed in a position of approximately 90 degree opening, resulting in said hull that reaches the surface if the system is configured to float on the lower elements of structure (1)
Fig 2C is an oblique top view of a close-up of an embodiment of a Navigating Wind Converter configured with a hull (3) that is disconnected from the hull through the possibility of an open hinge
Fig 2D is a sideview of an embodiment of a Navigating Wind Converter configured with a truss structure connecting hulls and turbines
Fig 2E is a top view of the same embodiment
Fig 2F is a front view of the same embodiment
Fig 2G is a view of the same embodiment where part of the structure (1) is elevated, showing how the truss structure is a shared topology between two tetrahedra carrying each a wind turbine and 3 hulls configured with 4 nodes on the outer perimeter except on the vertical perimeter where three nodes are present.
Fig 3A is an oblique top view close-up of an embodiment of a Navigating Wind Converter displaying an arrangement of a working platforms, technical elements and loading and unloading systems
Fig 3B is an oblique top view close-up of an embodiment of a Navigating Wind Converter where a main structure is configured with a strong and stiff interface to a hull far away from the wind turbines

### DETAILED DESCRIPTION OF THE DRAWINGS

The presented invention, the Navigating Wind Converter, addresses the difficulties found in providing a functionally complete and cost effective solution for wind-energy harvesting, chemical storage, chemical transformation, loading/unloading, manufacturing, maintenance and control of an unmoored system navigating in a cyclical path on the ocean surface. It is suited for circling the earth between the 40th parallel south and the 60th parallel south, but is suited for any location where a cyclical downwind path is possible.

The presented invention, the Navigating Wind Converter, is composed of solutions for five functional aspects of the craft:
- Being able to harvest energy and successfully navigate the wind and wave climate of the Southern Ocean;
- Having an architecture that allows the system to be built and maintained at reasonable cost;
- Providing a platform for the transformation of energy in usable raw materials and chemical energy storage and for practical loading and unloading of produce, raw materials and technical systems.

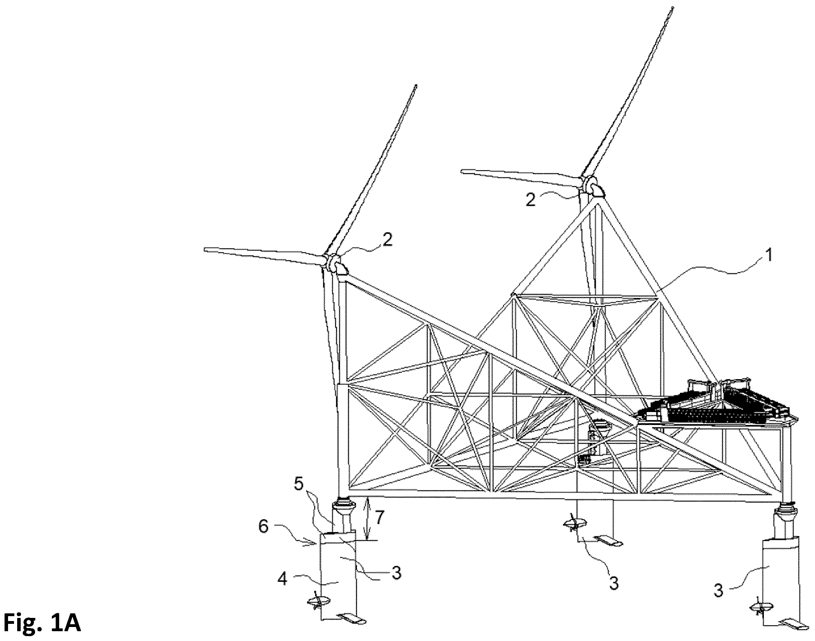

In one embodiment, visible in Fig 1A, the invention replaces the conventional mast by a stiff structure that supports the nacelle and that is connected to a least three hulls sufficiently distant to avoid severe roll, pitch and yaw. In one embodiment, some inner elements of the wind turbine lose their usefulness and can be put at rest or left out altogether from the wind turbine assembly. One such wind-turbine system that can be put at rest or eliminated in the wind turbine in one embodiment of the invention is the yawing system which includes the yawing control system, the yawing motors, the slewing bearing, the slewing brake, and the rotating electrical connection between the nacelle and the support of the wind turbine system. The manner by which this yawing function becomes superfluous in the invention consists in placing the nacelle of a wind turbine on a rigid floating structure where that structure orients itself in the wind, thereby displacing the yawing function into a hull/structure orienting function. The need for a slender but stiff mast is eliminated by the same means. Such systems also are disclosed in patents for floating wind solutions mentioned in the Background section.

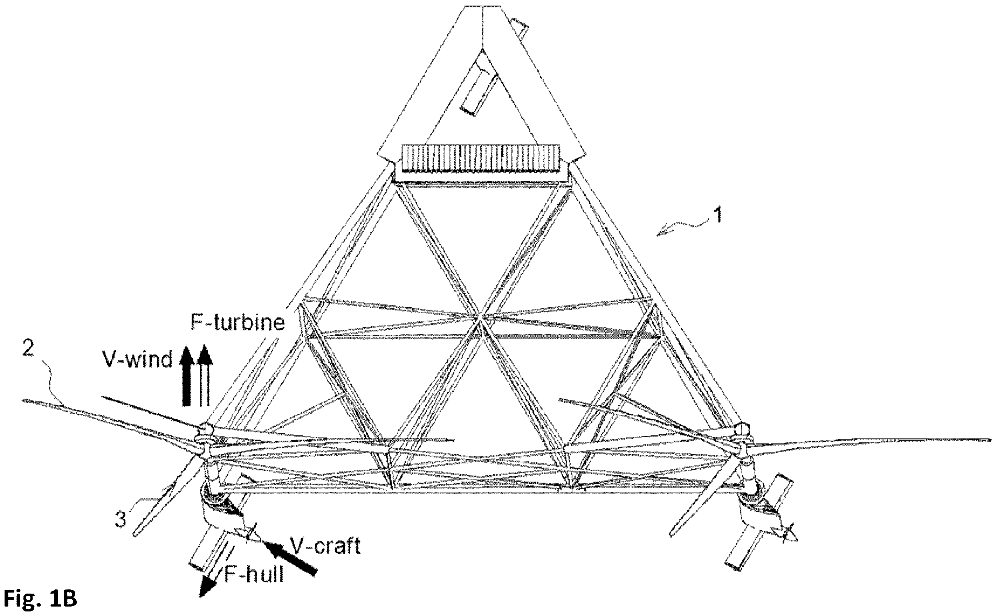

To achieve the advantage of a potentially simplified wind turbine assembly with lowered cost per MW and increased reliability, and also increase the capacity factor of the wind turbines for higher yield, the presently claimed invention proposes an innovative high mobility approach: the invention eliminates mooring cables and utilises the action of force exerted by wind on the wind turbines, the wind turbines on the structure and the structure on the hull arrangement to cause steerable motion in the water and independently controllable orientation of the structure (and hence wind turbines) with respect to the wind to be able to orient the wind turbine in the wind on one hand and to be able to steer the structure in a desired different direction on the other hand rather than opposing the force of the wind-turbines with active propellers such as disclosed in JP2013002399A or WO2024192038A1. In a further improved embodiment showed in Fig 1A and 1B, the hulls are configured with orientable passive lifting surfaces rather than active propellers to oppose the force of the wind-turbines and both reduce leeway speed and keep reduction of apparent wind in the wind turbines to very low levels; we shall examine this further.

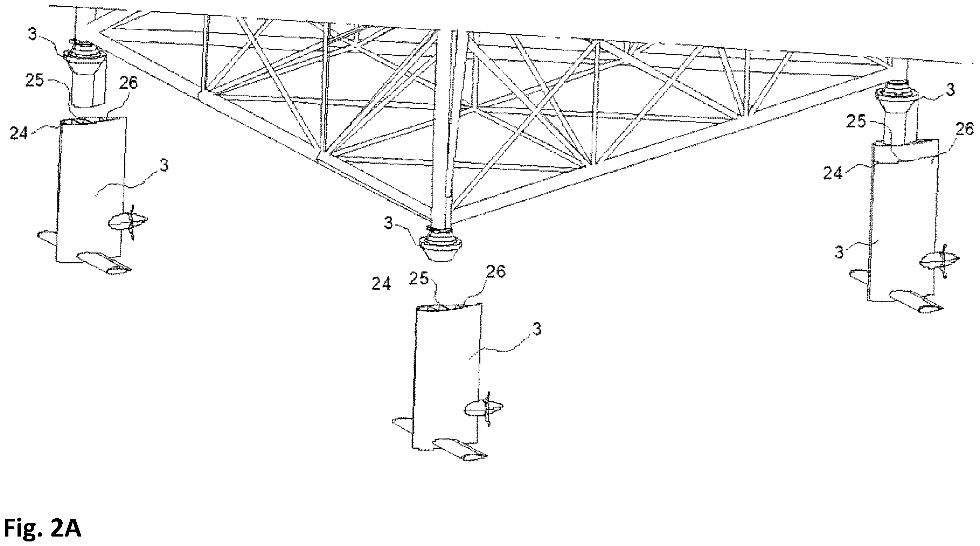

The presented invention introduces a key mechanism. In prior art, energy consuming propellers are required to counter the force of the wind turbine; this increases cost and reduces useful output substantially, easily by more than 30%. In the proposed invention, the hulls, when well configured to include a properly oriented and efficient lifting surface, oppose the wind force on wind turbines by creating sideways motion compared to the true wind like the keel of a sailboat. That sideways motion and wind turbine opposing force then has a small remaining downwind component and has low energetic cost. This is visible if Fig 2A. The balance of forces then amounts to the wind-turbines and structure creating a force opposing the apparent wind, the lifting force of the lifting surface creating a force perpendicular to the direction of motion in the water, and the drag of the hulls in the water completing the sum to zero. No propeller or turbine is needed per se to achieve the balance of forces or for the whole system to work. No propeller is needed to avoid rapid leeway. When the hulls are configured to behave like a wing with high lift and low drag, the sideways speed compared to the true wind can be substantial, and reduction of the apparent wind in the navigating turbine compared to a moored turbine can be almost eliminated. The apparent wind in the wind turbines is then constituted by the addition of a component in the direction of the true wind constituted by the true wind diminished by the (small) leeway component of the structure in the water and a perpendicular component resulting from the sideways motion of the structure in the water. This high apparent wind speed in the wind turbine is important in light wind conditions to keep the investment attractive because electricity production of a wind turbine varies with wind-speed cubed in a substantial portion of the operation conditions of a wind turbine, and reducing the apparent wind by 10% would reduce its electrical output by 0.9^3 = 27%, a severe reduction; this problem is avoided in the invention.

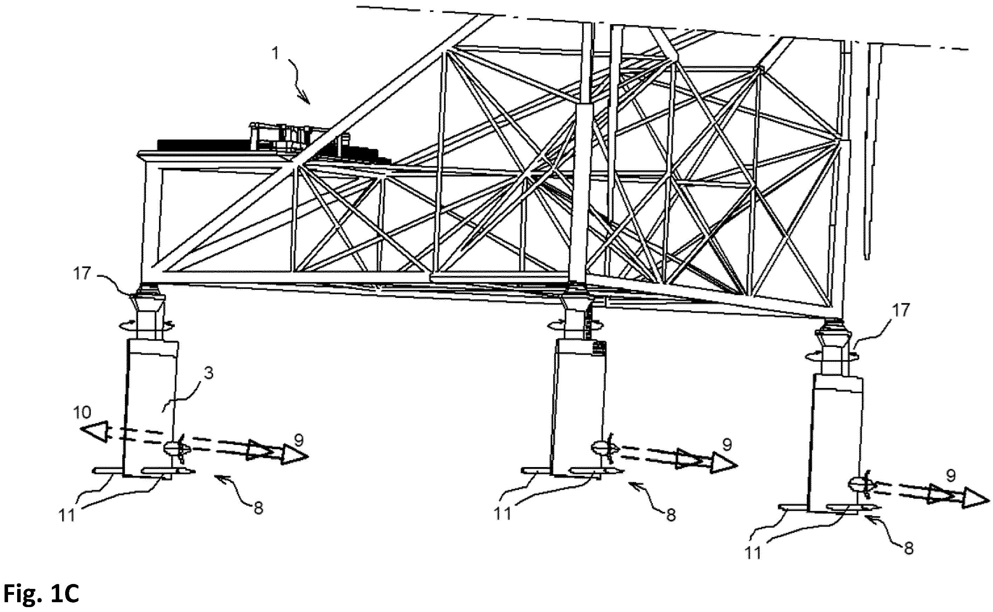

The presented invention introduces an additional key mechanism, visible in Fig 1B and Fig 1C, that may be capitalized upon compared to prior art: the creation of a controllable continuously varying flow-speed ratio in the water and the utilization of an electricity generating marine turbines in the water to complement the electricity generating potential of the wind turbines in the total system. Contrary to existing prior art JP2013002399A or WO2024192038A1 an embodiment of the invention utilises marine turbines to complement the electricity produced by the wind turbines instead of reducing output with force opposing propellers. We introduce an additional key mechanism: well configured hulls create something akin to a controllable continuously varying flow gearbox for a marine turbine placed in the water in the direction of their flow. The variation occurs between a high force low flow speed configuration when the hulls are oriented in the direction of the true wind, and a low force high flow speed configuration when the hulls are oriented almost perpendicularly to the true wind (say 80 degrees); at intermediary position, it will be a combination of medium force and medium flow speed. In the first extreme, the hulls are oriented downwind and the optimal energetic configuration results when the controllable drag of the marine turbine opposes the full thrust of the wind turbines and does so at lowest water speed to avoid depowering the wind turbines, hence the low flow speed high force label; at high wind it may be advantageous to use this approach without having low water speed to depower the wind turbine purposefully. At the other extreme, the hulls are oriented almost perpendicularly to the true wind, hull speed is high, and the turbines may have limited drag to avoid slowing down the hull and disrupting its lifting ability. Between the two extremes, orienting the lifting surface of the hull more sideways results in increasing the flow speed in the marine turbine without increasing leeway speed, and allowing the marine turbine to balance the forces with a low drag force at high speed, resulting in good electricity production at low shaft torque, hence the gearbox label. Controlling the operational point of the craft between the two extremes allows for utilisation of affordable marine turbines that operate at medium to high flow-speed with medium to low drag forces. Controlling the invention to operate between these extremes allows to optimise for four criteria: optimising power produced, moving in the direction desired to reach the next scheduled docking moment, staying in the vicinity of a depression for sufficient wind and sufficient production of electrical energy, and avoiding locations with likely unfavourable wind conditions in the near future.

As the whole system is conceived for as much electrical production as possible on one hand, and the ability to navigate on the other hand, configuring the system to operate at maximum output power in a wide window of bearing and speed compared to the true wind is valuable. For this, low drag of the hulls and efficient lift production is necessary; the combined condition is expressed as the lift to drag ratio of the hulls in the water when opposing the forces of the wind turbines. JP2013002399A and WO2024192038A1 have some ability to move in the water, but no substantial ability to oppose the forces of the wind turbine without propeller action or mooring line action. The embodiment of the invention as shown in Fig 1A, 1B and 1C is configured as three orientable wings protruding from the water and connected to a structure; the lift to drag ratio will be good as wings offer the best solution known to man for good lift to drag ratio.

For an embodiment with excellent electricity production, the invention has good hydrodynamic performance as examined earlier; this requires low drag which requires low wetted area and the embodiment therefore has low displacement (low weight) of the total system. Low weight of the structure connecting the wind turbines and the hulls contributes to good performance. Its truss structure is then a classical approach. The problem at hand offers some possibilities for innovative implementations of a truss structure that offers key advantages.

For maximum energy output, the invention should be operated at a location with regular winds and where a cyclical downwind path can be realized. This is the case in the area of the world between 40 degree South and 60 degree South where westerly winds are constantly present, and no land impedes the circular path around the earth. This allows a downwind permanent cyclical path of about 24.000 km interrupted by occasional moments for unloading what has been produced with the electricity, for loading consumables, and for maintenance. The winds there are strong on average, and frequent storms and wave systems are present, with typical wavelength reaching 250m. A distance between hulls in the water of the order of that distance is then helpful to keep oscillations of the structure within low bounds; this matches extraordinarily well the size of a structure carrying two large turbines of 120 m radius side to side. An embodiment with a triangular structure then seems optimal, with one turbine at two of the corners and a chemical transformation plant at the remaining one that utilizes the produced electricity to reduce water and nitrogen to ammonia or perform other energy intensive reaction. The clearance of the structure with the sea-surface at rest must exceed wave height; significant wave height of 15m is not uncommon, this results in max wave size of 25m or whereabout which then also is the required clearance.

For low drag and high lift as examined earlier an embodiment of the invention uses a structure with three low waterplane surface area hulls or more. Numerous publications disclose state of the art of Small Waterplane Area Twin Hull or multi-hull vessels. None of this vessels are configured to generate lift to compensate for large sideways forces as caused by a wind-turbine oriented sideways compared to the direction of motion in the water. US6213042B1 discloses a Small Waterplane Multi Hull Vessel with submerged turbine drive where the arrangement aims at moving through the water with limited effect from sea-surface disturbances where the driving means are situated in the structure connecting the hulls. CN203199142U discloses a Small Waterplane Area Twin hull structure with a foil like structure piercing the water to connect the buoyancy generating elements (hulls) to the above-water structure. In one embodiment the presently disclosed Navigating Wind Converter substantially reduces much further the effect of both elevation and orbital speed of surfaces ocean waves by providing a solution for having much smaller wetted perimeter protruding through the water surface and having a much lower center of buoyancy: the use of three wing or giant rudder-like hulls. In one embodiment, the presently disclosed Navigating Wind Converter solves the problem of being able to independently choose the direction of motion and the orientation of the above-water structure by articulating each of the hulls around a vertical axis. In one embodiment, the Navigating Wind Converter solves the problem of opposing the forces of the wind-turbines mainly by the lifting force (as opposed to the drag force) generated by properly oriented hulls compared to the wind turbines.

Numerous publications disclose the state of the art in ship propulsion and marine turbines, for instance NL2000150C2 discloses a turbine for production of energy from flowing water, US12078142B2 discloses a turbine with secondary rotors, US10336430B2 discloses a pod propulsion unit of a ship, US2002197918A1 discloses an arrangement and method for turning a propulsion unit. In one embodiment, the disclosed Navigating Wind Converter aims at avoiding the need of a two stage rotating system for underwater turbines such as disclosed in US12078142B2 yet provide good speed in the airgap of the electrical generator; the rotating main blade is replaced by the immobile lift-generating hull. In one embodiment, the disclosed Navigating Wind Converter aims at avoiding the need to connect the orientable drag or thrust force below the water surface under a hull such as disclosed in US10336430B2 by connecting to a structure above the waterline. In one embodiment, shown in Fig 1C, the need to frequently adapt a slewing angle of a marine turbine or thruster to steer is eliminated because in the triangular structure with marine turbines pointing substantially sideways, controlled drag variation of a marine turbine connected to the hull on which the factory rests is an effective steering method.

Numerous publications disclose the state of the art of floating wind turbine systems in which hydrogen is produced for energy storage. CN113859458A discloses a floating offshore wind turbine system with three legs where buoyancy effects are used to stabilize the system using underwater weights for each leg. CN112761883A discloses a floating platform combining wind energy production from wind turbines and hydrogen production in a structure that utilizes pre-tension. In one embodiment, the disclosed Navigating Wind Converter substantially improves the unloading possibilities of produced molecules by storing these in standard shipping containers and by configuring the craft/system for good maneuverability, and by configuring the craft with ample industrial working surface on deck.

The document "Unmoored: a free-floating wind turbine invention and autonomous open-ocean wind farm concept" by Jack H Raisanen presents some aspects of solutions to the problem of energy harvesting and storage on the high seas. (https://iopscience.iop.org/article/10.1088/1742-6596/2362/1/012032/pdf). NREL has outlined sketch depicting an unmoored turbine in 2023. The presently disclosed Navigating Wind Converter solves the problem of having to oppose the thrust of the wind turbine fully by underwater-turbines to avoid depowering the wind-turbines by using lift-generating hulls to do so and generate sideways speed that mitigates the reduction of apparent windspeed in the wind turbines when useful yet allow the use of economically viable marine-turbines to generate electrical energy.

The following is a detailed description of the invention for being able to harvest energy and successfully navigate the wind and wave climate of the Southern Ocean.

The Southern seas between 40degree South and 60 degree South are the theatre of strong westerly winds that jointly embody a near limitless amount of renewable energy. A part of that energy is transferred to the ocean through ocean waves; that energy may also be harvested by wind-turbines at no environmental cost or threat.

A purpose of a Navigating Wind Converter is to efficiently navigate the Southern Ocean and harvest wind energy and then subsequently utilise that energy to create energy bearing molecules (fuels) or energy requiring materials.

An important aspect of the invention is the presence of at least two lifting surfaces in the water beneath the structure in order to use the force of the wind to generate speed in the water, then allow steering the system in a desired course with a sideways component to the true wind and then choose the proper structure-heading to keep a wind turbine in the resulting apparent wind. This is depicted in Fig 1F. In the left diagram, the system has a downwind course (50), parallel to the true wind (51) resulting in an apparent wind (52) of identical direction but lower strength. The force causing the motion in the water is the force exerted by wind turbines (2) on structure (1); the lifting surfaces (53) generate no force in the water because they point in the direction of motion (55) of the system in the water. In the diagram next to it, the course direction is changed to (55) though the rotation of the lifting surfaces (53) to include a sideways component; the heading of the structure is not changed, but the course is; the resulting apparent wind (56) is not perpendicular to the wind turbine rotors (2). In the centre right diagram, the orientation of at least one of the lifting surfaces (53) is changed with respect to another lifting surface (53), causing two opposed reaction forces at a distance (54) and (57), in turn causing a change in heading of the structure (1). In the right diagram, the change of orientation of the structure is completed without changing the course (55) of the system, and the apparent wind is again perpendicular to the rotors of the wind turbines. At least two separately controllable lifting surfaces (53) are needed in the water at a distance from each other to achieve this effect; this capability to control course and heading independently is a kay aspect of the invention.

The Southern seas are characterised by oft occurring strong winds and high waves; a key idea of the invention is to minimise forces from waves by keeping the wetted surface small, utilise small waterplane area hulls with a deep centre of buoyancy, and have good clearance of the structure with the oft agitated sea surface. Another idea is to utilise large dimensions to be less sensitive to surface waves on one hand, and match the large size of available wind-turbines to configure a vessel that is naturally matched to its environment.

Another invention idea is to avoid heavy displacement and large wetted area to have easy displacement and utilise lifting surfaces to generate forces opposing the wind turbine thrust in order create freedom of movement on the ocean surface.

Another idea is to optionally utilise recent technology developments to build the vessel to allow unmanned operation and reduce cost and boredom.

We need a solution which is rugged and has low building and maintenance cost. We also know that the total dimensions will be large: A typical nacelle has height of 150m and more and blade radius of 120 m or more requiring 250 m width if two are put side to side. Large width and length of the waterline is required because of the wave length of surface waves of 250m or so. It also needs to be strong because waves can reach 25m, and max thrust and max moments from 15 MW turbines are enormous 6 MN or so and 160 MNm. We also know that existing masts of immobile-wind-turbines are too flexible to handle additional forces stemming from inclination and sea-caused accelerations. In one embodiment of the invention, it includes a truss structure with a triangular aspect as seen from the top and the side, with a truss-held wind turbine on 2 corners, and the chemical transformation factory on the third, lower point. The wind turbine size (radius size 120m), requiring 250 m width has a good match with the sea-wave wave length (210-250m). Bending oscillations for turbine masts are eliminated, the effect of sea-motion is strongly reduced and a light-weight system emerges within the constraints. An aspect of the invention is then how to avoid leeway due to turbine thrust; leeway or downwind speed would enormously reduce the output of the wind turbines which produce energy that varies with apparent wind cubed. The obvious solution to utilise a marine turbine to oppose the majority of the force of the wind turbine is economically unattractive: if the thrust of the marine turbine is equal to the thrust of the wind-turbine and the flow speeds of both a taken equal, the total amount of electricity produced reduces enormously as it goes from A.V^3 to 2*A*(V/2)^3: a division by 4. If the marine turbine is designed to achieve the same thrust at lower speed, its cost will increase very rapidly and the total amount of energy produced still reduces easily by 20 to 40%. The creative solution in one embodiment of this invention is to have hulls of the structure act as wings or keels and generate lift opposing the majority of the thrust of the wind turbines by moving sideways (comparable to a sailboat), and having small marine turbines put on them to act on water accelerated by the wings. This can be done at acceptable cost. This requires orientable hulls compared to the structure.

A Navigating Wind Converter is therefore a ship or drone with low displacement in relation to its dimensions with an overall block coefficient often below 0.2. It often has the above water structure configured to have a clearance with the ocean sufficient to avoid substantial wave impact when navigating in normal operation.

The presently claimed invention proposes an innovative high mobility approach.

The key idea of the invention, the Navigating Wind Converter, is to eliminate mooring cables of floating wind systems to oppose the force of the wind on the wind turbines and to orient the system in the wind on one hand and on the other hand to eliminate the need for a propeller or turbine to always directly oppose the force of the wind-turbines; the Navigating Wind Converter is a navigating Small-Waterplane-Area Multi-Hull with a connecting structure above water that bears at least one wind-turbine, and is characterised by having at least three hulls or topological concentrations of buoyancy-force jointly spanning substantially the larger occurring wavelengths in the considered water bodies of operation or more in both length and width, by having the above water structure configured to transmit the majority of moments and forces to and between the hulls and wind turbines, and by having at least two hulls configured and shaped to move in the water each in a controllable orientation compared to the structure, resulting in possible travel of the Navigating Wind Converter in a desired direction under the action of external forces and also in orientation of the Navigating Wind Converter in a desired direction which may not be the same direction. The orientation of the structure in the wind, and thereby the wind turbines, is controlled independently from the direction of motion of the structure in the water, and results from the controlled orientation of hulls (3) with respect to the structure (1). This is visible in Fig 1A where in this case two wind turbines (2) are borne by a structure (1) that rests on three hulls (3); the articulation of hulls (3) with respect to structure (1) is visible in Fig 1C with a more close-up depiction of hinges (17) around a substantially vertical axis. Fig 1A gives and overall depiction, where hulls (3) are divided in a portion under water (4) and a portion above water (5) and a waterline (6). The direction of motion in the water results from the combined action of wind forces above water on one part, and forces of the waterflow on the hulls on the other part, and is controlled by the orientation of the hulls (3) compared to the true wind direction.

In a further improved embodiment showed in Fig 1A and 1B, the hulls (3) are configured with or as orientable passive lifting surfaces, similar to wings or foils, rather than rotating propellers or turbines to oppose the majority of the force of the wind-turbines and both reduce leeway speed and keep reduction of apparent wind in the wind turbines to very low levels. In Fig 1B, a wind turbine (2) generators a force F-turbine (two-line arrow) on structure (1) in the direction of V-wind (solid arrow); the speed of the system V-craft (solid arrow) in the water allows a foil-shaped hull (3) to generate a lift-force (F-hull) perpendicular to its direction of motion in the water. This lift force generation mechanism is well known to flow-engineers, and the calculation of the required surface of hull (3) at a given speed V-craft is straightforward. The ability of such an arrangement to generate the required perpendicular force opposing the wind-turbine force F-turbine at low leeway speed is good, and has many similarities with the keel of a sailboat or the wings of a plane. The improvement resulting from the hulls including foils for lift generating translates in many advantages for the invention, among which the following: improved ability to manoeuvre, higher average apparent wind in the wind-turbines and consequently higher average electrical yield, improved ability to choose the leeway speed, and capability to operate and oppose the forces of the wind on a wind turbine (2) and structure (1) without marine propellers or marine turbines.

The presented invention introduces a key mechanism. In prior art, energy consuming propellers are required to counter the force of the wind turbine; this increases cost and reduces useful output substantially, easily by more than 30%. In the proposed invention, the hulls, when well configured to include a properly oriented and efficient lifting surface, oppose the wind force on wind turbines by creating sideways motion compared to the true wind like the keel of a sailboat. That sideways motion and wind turbine opposing force then has a small remaining downwind component and has low energetic cost. This is visible if Fig 2A. The balance of forces then amounts to the wind-turbines and structure creating a force opposing the apparent wind, the lifting force of the lifting surface creating a force perpendicular to the direction of motion in the water, and the drag of the hulls in the water completing the sum to zero. No propeller or turbine is needed per se to achieve the balance of forces or for the whole system to work. No propeller is needed to avoid rapid leeway. When the hulls are configured to behave like a wing with high lift and low drag, the sideways speed compared to the true wind can be substantial, and reduction of the apparent wind in the navigating turbine compared to a moored turbine can be almost eliminated. The apparent wind in the wind turbines is then constituted by the addition of a component in the direction of the true wind constituted by the true wind diminished by the (small) leeway component of the structure in the water and a perpendicular component resulting from the sideways motion of the structure in the water. This high apparent wind speed in the wind turbine is important in light wind conditions to keep the investment attractive because electricity production of a wind turbine varies with wind-speed cubed in a substantial portion of the operation conditions of a wind turbine, and reducing the apparent wind by 10% would reduce its electrical output by 0.9^3 = 27%, a severe reduction; this problem is avoided in the invention.

One embodiment of the presented invention introduces an additional key mechanism, visible in Fig 1B and Fig 1C, that may be capitalized upon compared to prior art: the creation of a controllable continuously varying flow-speed ratio in the water and the utilization of an electricity generating marine turbine in the water to complement the electricity generating potential of the wind turbines in the total system instead of reducing output with force opposing propellers; note that the drag force of the turbine is oriented in the direction of motion of the hull (3) in the water rather than in the direction of the force generated by the wind turbine (2). In Fig 1C structure (1) rests on three hulls (3) that are controlled in their orientation around a substantially vertical axis through hinges (17) with said structure (1). A hull (3) and a marine turbine (8) are configured to operate in the water flow where the force of the flow on the hull and the force of the flow on the turbine may be substantially perpendicular when underwater section (4) of hull (3) is made to operate at an angle of attack to the water flow. Marine turbine (8) is configured to have controllable drag (9) in intensity as shown by the double lined arrow with variable length. We introduce the additional key mechanism: well configured hulls (3) create something akin to a controllable continuously varying flow gearbox for a marine turbine (8) placed in the water in the direction of their flow. The variation occurs between a high force low flow speed configuration when the hulls (3) are oriented in the direction of the true wind, and a low force high flow speed configuration when the hulls are oriented almost perpendicularly to the true wind (say 80 degrees); at intermediary position, it will be a combination of medium force and medium flow speed. In the first extreme, the hulls (3) are oriented downwind and the optimal energetic configuration results when the controllable drag of a marine turbine (8) opposes the full thrust of the wind turbines (2) and does so at lowest water speed to avoid depowering the wind turbines, hence the low flow speed high force label; at high wind it may be advantageous to use this approach without having low water speed to depower the wind turbine purposefully. At the other extreme, the hulls are oriented almost perpendicularly to the true wind, hull speed is high, and a marine turbine may be configured only for limited drag to avoid slowing down the hull and disrupting its lifting ability. Between the two extremes, orienting the lifting surface (4) of a hull (3) more sideways results in increasing the flow speed in a marine turbine (8) without increasing leeway speed and allowing the marine turbine to balance the forces with a low drag force at high speed, resulting in good electricity production at low shaft torque, hence the gearbox label. Control the drag intensity of the marine turbine affects the speed of the craft in the water. Controlling the operational point of the craft between the two extremes allows for utilisation of an affordable marine turbine that operate at medium to high flow-speed with medium to low drag forces. Controlling the invention to operate between these extremes allows to optimise for four criteria: optimising power produced, moving in the direction and speed desired to reach the next scheduled docking moment, staying in the vicinity of a depression for sufficient wind and sufficient production of electrical energy, and avoiding locations with likely unfavourable wind conditions in the near future.

As the whole system is conceived for as much electrical production as possible on one hand, and the ability to navigate on the other hand, configuring the system to operate at maximum output power in a wide window of bearing and speed compared to the true wind is valuable. For this, low drag of the hulls and efficient lift production is necessary; the combined condition is expressed as the lift to drag ratio of the hulls in the water when opposing the forces of the wind turbines. An embodiment of the invention as shown in Fig 1A, 1B and 1C is configured as three orientable wings protruding from the water and connected to a structure; the lift to drag ratio will be good as wings offer the best solution known to man for good lift to drag ratio.

In one embodiment a further improvement of the invention is disclosed. This is also visible in Fig 1C. Controlling the orientation of a hull (3) with respect to structure (1) may require substantial actuation force and may not be very rapid. In one embodiment, the invention is configured with at least two marine turbines (8) with controllable drag placed in the direction of the water flow., but put at a distance of each other. Varying the drag between the two marine turbines (8) then creates a moment around the vertical axis for structure (1) and causes controlled orientation of said structure (1) and hulls (3) without rotation of a hull (3) with respect to said structure (1); this embodiment then has an additional efficient and rapid steering mechanism that requires no separate actuation of large parts.

The invention is a wind drone or a craft that translates and steers in the waterplane as all powered hulls do; the out of plane motions pitch, roll and heave are limited by the dimensions of the structure and the hulls with respect to occurring wavelength, but may nevertheless cause detrimental effects to the operation of either the turbines or the chemical plants on board. Trim deviations caused by weight distribution may also have detrimental effects.

One embodiment of the invention includes an additional improvement to reduce structure motions and improve trim without increasing the small waterplane area of a hull that is so important to friendly wave interaction. In one embodiment, visible in Fig 1C, a hull (3) is configured with an additional lifting surface (11), placed with its chord substantially in the horizontal plane and arranged to generate force in a substantially vertical direction when the water flow orientation has an angle of attack with the lifting surface; we call this an elevation rudder (11). The elevation rudder damps vertical oscillations that could occur due to vertical acceleration forces on said hull (3).

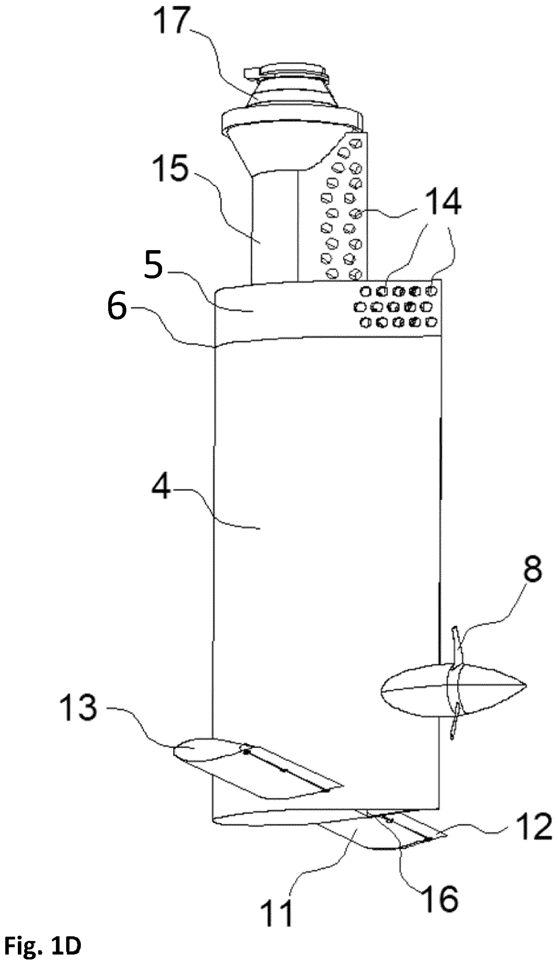

Another embodiment further reduces the out of horizontal plane motions of the system: an elevation rudder (11) in Fig 1D is configured with a controllable flap (12) to control the lift of the elevation rudder and affect the draught of the hull (3) it is part of. Controlling flap (12) downwards creates a lifting force that reduces the draught of the hull, and controlling it upwards does the opposite. Said control is used to stabilise structure (1) and reduce or avoid out of horizontal plane motions of structure (1) under the effect of sea-waves. A compensator (13), with wetted surface upstream of flap (12) may be added to reduce actuation force for flap (12). As shown in Fig 1A - 1D, the elevation rudder (11) and its flap (12) are able to lift or sink the hull (3) by about 10% of its draught, amounting to 4.4 m up and down for a craft of 250 m size.

Sea waves create motion for the structure, but also create impacting forces on hulls (3) as visible in Fig 1A by smashing on the protruding part (5) above waterline (6) of a hull.

Another embodiment, visible in Fig 1D, further reduces forces of the sea-waves impacting a hull (3) for its portions (5) and (15) above the waterline (6) in quartering seas by configuring the protruding parts (5) and (15) of hull (3) above water with holes or openings (14) in the trailing edge that absorb the impact energy of sea-waves.

Many solutions for floating wind turbines include architectures with a plurality of wind turbines and hulls or include solutions with large heavy submerged structures. For an embodiment with excellent electricity production, the invention has good hydrodynamic performance as examined earlier; this requires low drag which requires low wetted area and the embodiment therefore has low displacement (low weight) of the total system. Low weight of the structure connecting the wind turbines and the hulls contributes to good performance. Low weight also may contribute to low building cost by saving materials.

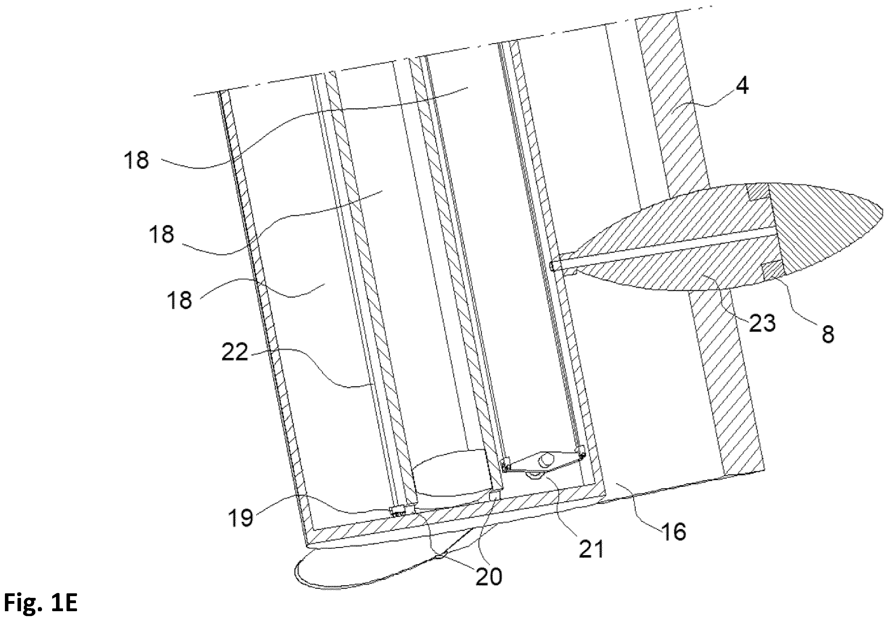

In one embodiment, the invention is particularly efficient in terms of in terms of material utilization and low wetted surface while having good stability because many forces and moments stemming from the action of the wind and the water cancel out or at least do not do not add up to increased requirements of material -thickness for strength. That embodiment is a Navigating Wind Converter including two large wind-turbines and having three main hulls with a small water plane area each placed at a large distance between them in relation to the waterplane dimensions, and including a truss structure connecting the three hulls and the said wind turbines, visible in Fig 1.

In one embodiment, the invention is further characterised by most of the weight of one given turbine being transmitted to one single hull through the truss elements. The truss structure has few elements, the forces in each of the elements are both predictable and low.

In one embodiment, the Navigating Wind Converter invention is further improved and characterised by having wind turbines configured and controlled to have a fixed yaw orientation; this results in lower complexity.

In one embodiment, visible in Fig 1C, a Navigating Wind Converter is configured to include a marine turbine (8) that can be operated in thruster mode and generate thrust (10) at the expense of electricity consumption rather than drag (9) to generate electricity in order to manoeuvre the energy platform in a desired direction or orientation. This is important to dock, unload, or to get out of a wind-lull.

In one embodiment, visible in Fig 1D, a Navigating Wind Converter is configured with a Small Waterplane Surface Hull (3) having a part underwater (4) having a portion of its section open to water ingress through an opening (16). This is to avoid outsized moments on hinge (17) where the rotation axis relative to the chord must be optimised both for buoyancy forces and lifting forces occurring at quarter chord in normal operation and much behind that point for buoyancy forces if the rear part of the foil is allowed to participate in buoyancy.

In one embodiment, visible in Fig 1E, a Navigating Wind Converter is configured with a Small Waterplane Surface Hull (3) having an underwater part (4) equipped with buoyancy control through ballasting in volumes (18). The ballasting volume is equipped with level control through a flow actuator (19) fed by piping (22) leading outward. This is important to compensate for stored produce or other low cyclical disturbances.

The following is a detailed description of the invention for having an architecture that allows the system to be built and maintained at reasonable cost.

The general dimensions of the Navigating Wind Converter are large, in the order of 150-300m width and length, yet the usefulness of the invention is only present if its cost is low and if it can be manufactured without undue difficulty. A substantial challenge is formed by the hulls (3) of an embodiment of the invention as seen in Fig 2A: their draught is in the range of 20 to 50 meters. The width and depth combination makes the use of any floating or dry dock impossible. In one embodiment shown in Fig 2A, the hulls (3) are configured with controllable buoyancy chambers (24), (25) and (26) that are controlled though the action of pipes and air or pipes and pumps, and thereby allow placement of the hulls in the water after assembly of a main structure (1), and subsequent elevation of the main structure (1) to operational height above the sea surface, or subsequent lowering again.

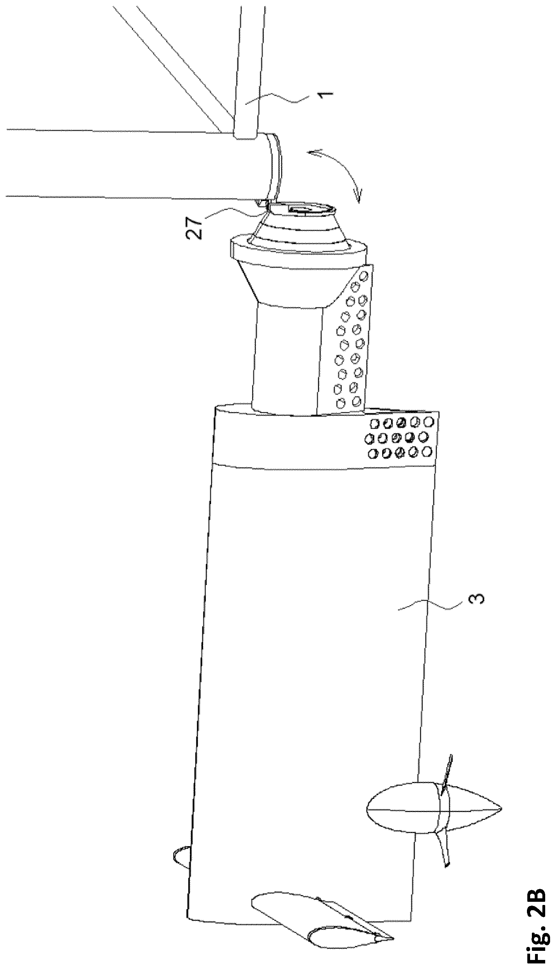

In one embodiment of the Navigating Wind Converter shown in figure 2B, a hull (3) is connected to a main structure (1) with a hinge (27) having an axis including a horizontal component; the hinge configures said hull to rotate and allow it to rotate towards the surface or towards the operational position; the hinge may include a locking system such as bolts or clamps to connect and immobilize the two articulated parts of the said hinge once the hull is in operational position. Said hinge is extremely practical to allow maintenance on parts that would otherwise be difficult to access, and to allow easy placement of the hull in the operational position. Fig 2B displays the hull in a position where it would reach the water surface if the hull floats on its main structure (1).

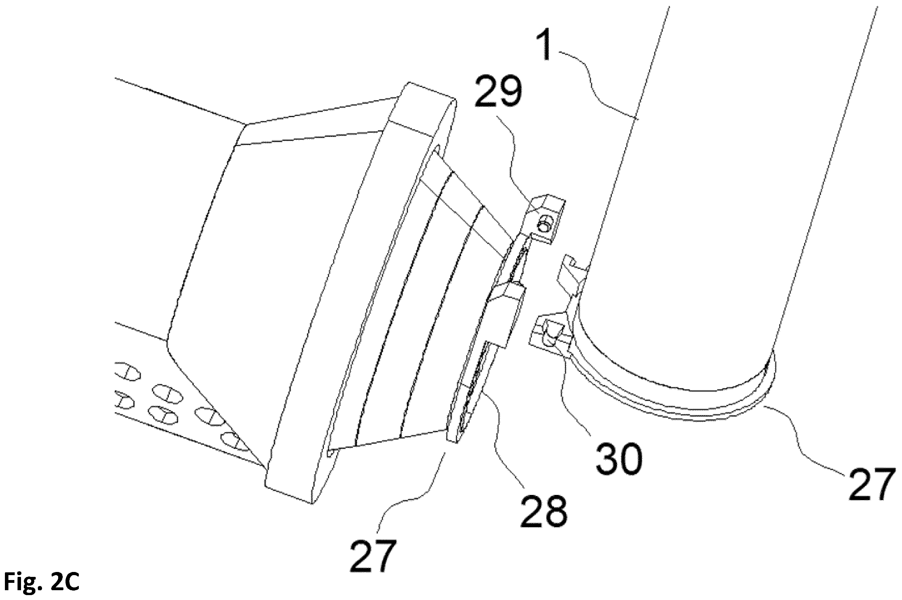

In one embodiment of the Navigating Wind Converter shown in figure 2C, a hinge (27) normally connecting a hull (3) with a main structure (1) is configured with an open architecture and is shown in a configuration where a hull (3) and a main structure (1) are disconnected. The hinge has an open volume (30) where a hinge shaft (29) connected to the hinge part (28) in turn connected to a hull (3) can be locked in translation but left free to rotate. This arrangement is practical to position and place a hull (3) after structure (1) has been manufactured or modified.

In one embodiment, visible in Fig 2A,a Navigating Wind Converter is configured with separately controllable buoyancy chambers (24), (25), (26) at different distances from the rotation axis of the hinge (27) visible in Fig 2B, configured and controlled to pretension the locking system when a hull (3) is in operational position through partial emptying from water of a chamber (24), (25) or (26) exerting its buoyancy force away from the hinge axis, and said buoyancy chambers being configured and controlled to actuate the hull to rotate upward towards the water surface or downwards from it when the hinge is unlocked and such action is required.

We have now addressed how the substantial draught of a Navigating Wind Converter can be addressed for manufacturing or maintenance. Manufacturing a structure that connects wind turbines, hulls and chemical transformation installations is also important in terms of balancing cost and strength.

In one embodiment, a Navigating Wind Converter is equipped with a structure (1) with hoisting equipment to connect to a hull (3) and lift a substantial part said hull above the water

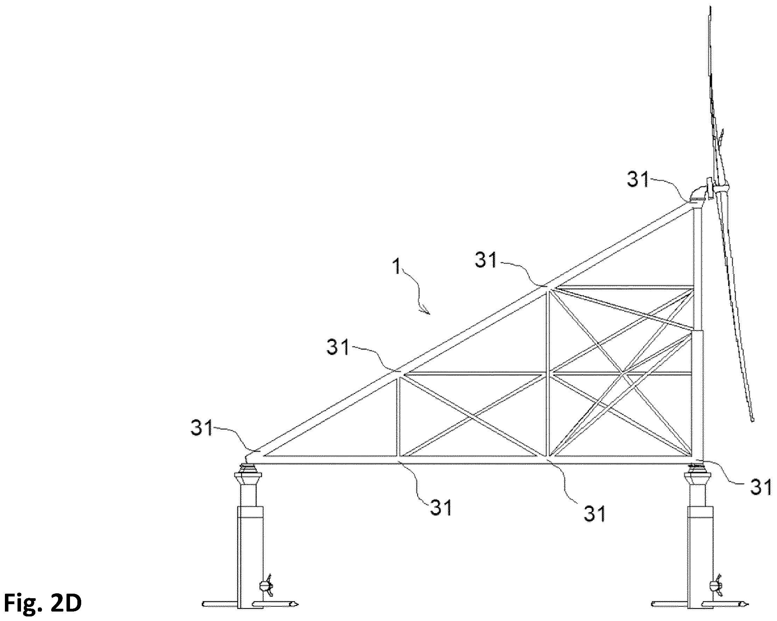

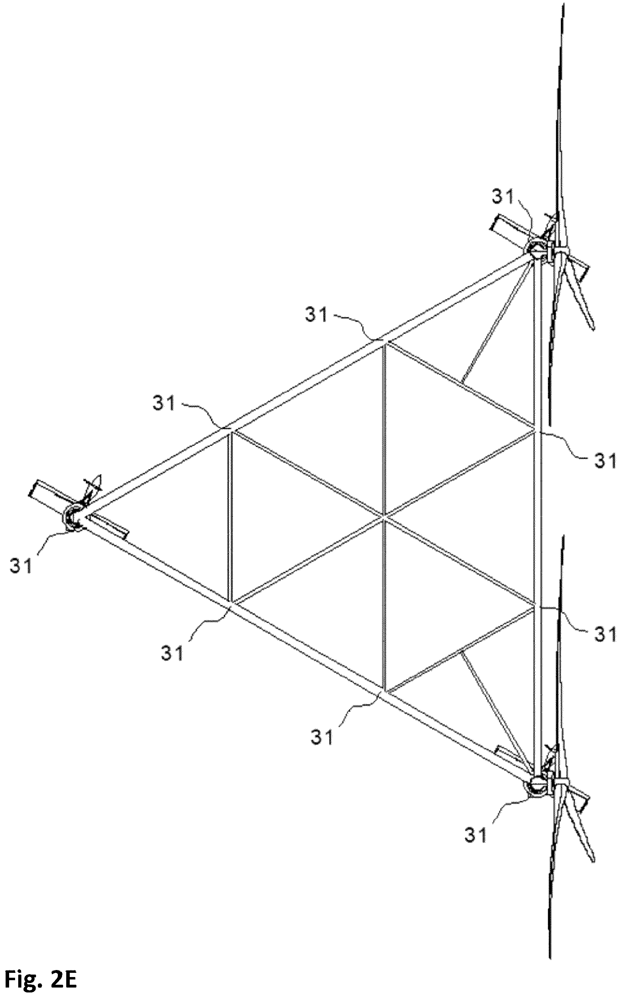

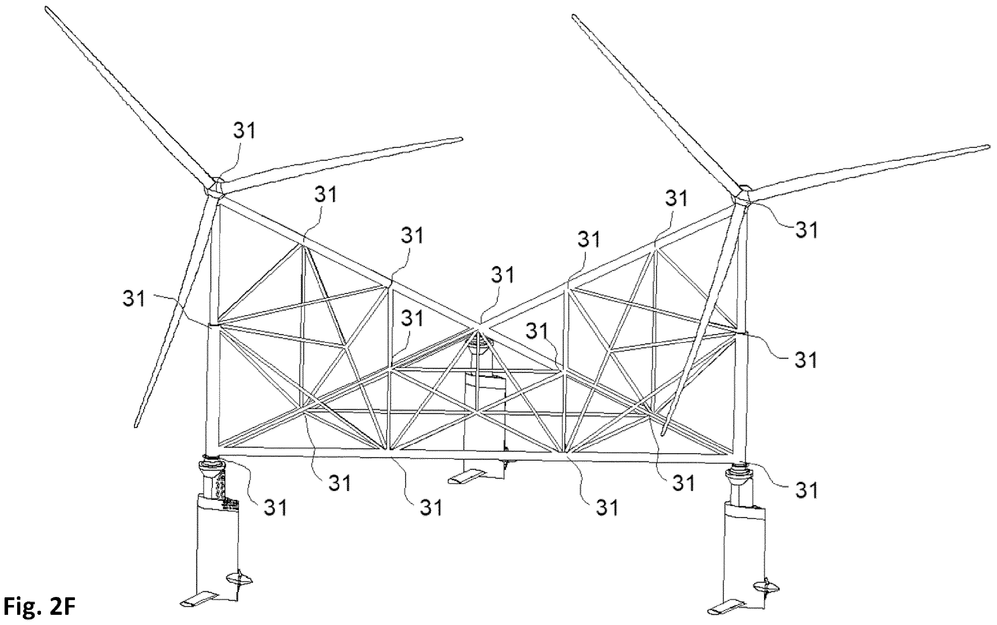

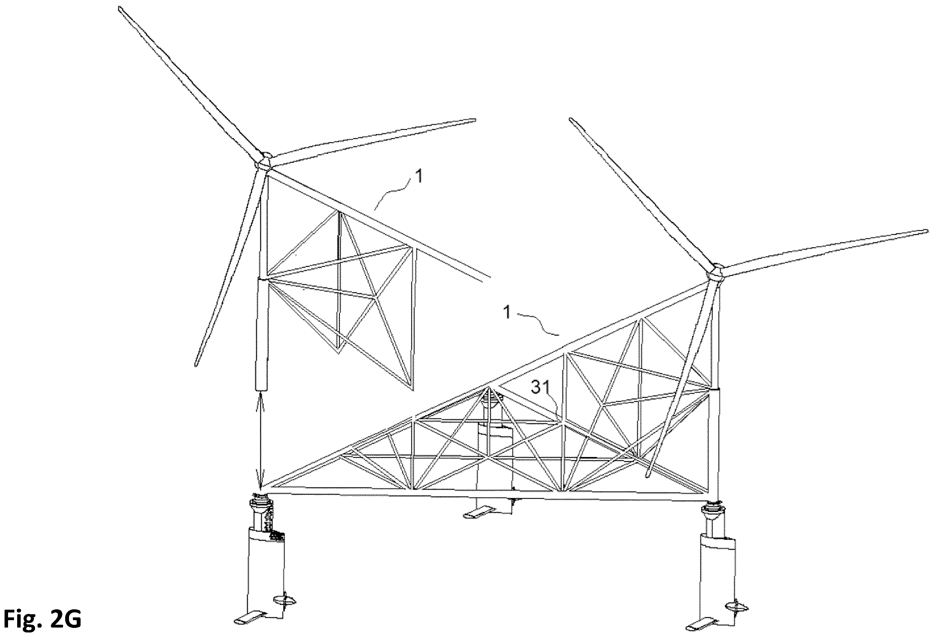

Fig 2D shows an embodiment of the Navigating Wind Converter where Wind turbines and hulls are connected by a main structure (1) being constituted of truss elements. Forces and moments on a wind turbine or on a hull will translate substantially in compression and extension loads in the truss elements; bending loads such as in conventional turbine masts are eliminated. This structure reduces flexion and oscillations to a minimum and allows manufacturing at very low weight and cost. The truss elements may be chosen as beams or tubes. In all cases, the beam elements must be configured for acceptable tensile and compression stress, for buckling when under compressive load, for sheet buckling and for wind-excited resonance. Due to the large size of the Navigating Wind Converter, a truss structure visible in Fig 2D, 2E, 2F, 2G having four nodes (31) on the outer perimeter, 3 nodes (31) on the vertical elements and one node (31) in the middle is attractive: choosing fewer nodes results rapidly increasing mass especially due to sheet buckling constraints, and choosing more increases complexity. This is visible in an embodiment of the Navigating Wind Converter where the size-view in shown in Fig 2D, the top view in Fig 2E, the front view in Fig 2F offer an arrangement of nodes (31) on structure (1)

In one embodiment of the Navigating Wind Converter, the mass of the connecting structure (1) is kept low by configuring the truss structure to be constituted of two tetrahedra with 4 nodes (31) on the outer perimeters except on the vertical perimeter where it has 3 nodes, said two tetrahedra having shared elements: each tetrahedron bears a wind turbine and 3 hulls (3) as visible in Fig 2E, Fig 2F and Fig 2G; Fig 2G shows a view where one tetrahedron is isolated and the elements pertaining exclusively to the other are lifted.

The following is a detailed description of the invention for providing a platform for the transformation of energy in usable raw materials and chemical energy storage and for practical loading and unloading of produce, raw materials and systems.

A Navigating Wind Converter produces a substantial amount of energy and that energy must be utilise to produce or convert molecules, for example electrochemically. Such systems require working surface, protection from the elements, means to perform maintenance or repair, volume for storage. Ideally, the cost of added structure to house all this items should be low.

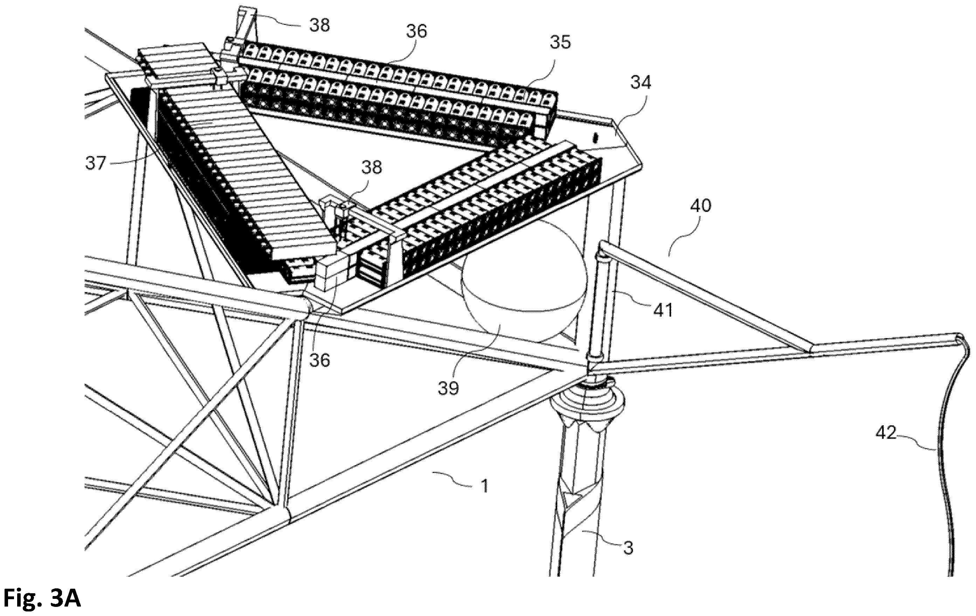

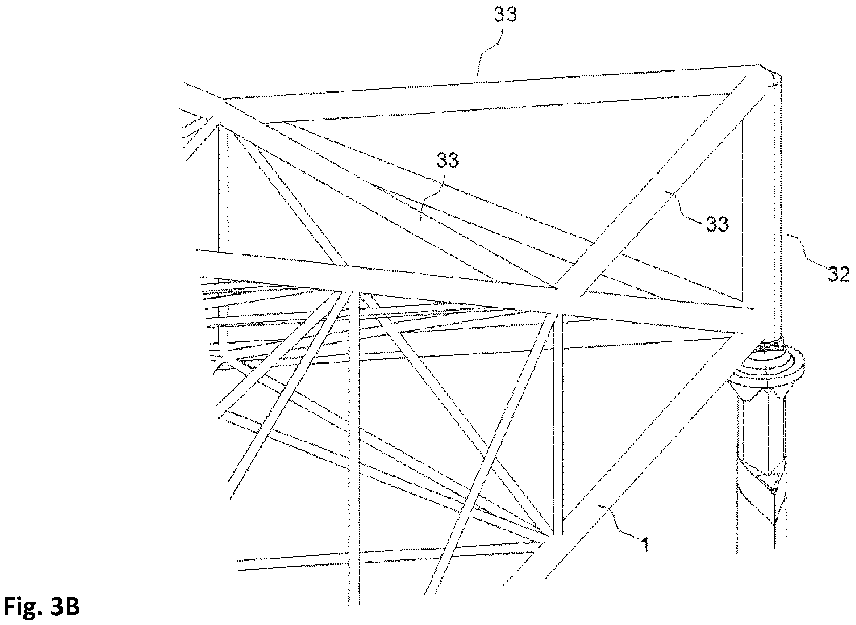

In one embodiment of a Navigating Wind Converter shown in Fig 3B, a Navigating Wind Converter is configured with an interface to a hull including a vertical truss element (32) positioned at the converging point of truss elements connecting two wind turbines and two other hulls, and three horizontal truss elements (33) connecting the free end of said vertical truss element (32) to a main structure (1) at the location of the nearest node. These elements (32) and (33) are useful to provide strength and stiffness to the interface with a hull, but also to provide a natural support structure for industrial working surfaces (34) as shown in Fig 3A.

In one embodiment of a Navigating Wind Converter, one to three industrial working surfaces (34) as in Fig 3A are placed at least partially symmetrically over horizontal truss elements that provide stiffness and strength to a hull at a corner away from the wind turbines.

In one embodiment of a Navigating Wind Converter visible in Fig 3A, a number of technical installations (37) that utilise the energy produced on board are positioned and locked on an industrial working surface (34); these installations may be containerized or modular. The idea is that the Navigating Wind Converter must never be kept at standstill long, and that raw materials, produce, or installations needed repair must be replaced, loaded or unloaded very rapidly once the system docks.

In one embodiment of a Navigating Wind Converter visible in Fig 3A, a Navigating Wind Converter is configured with containerized of modular piping and connection elements (36) fixated on industrial working area (34) to lead electricity, goods and liquids to and from the technical or chemical transformation units (37) or (39). This also is part of the idea to avoid downtime of the system and keep the system reconfigurable for any type of production.

In one embodiment of a Navigating Wind Converter visible in Fig 3A it is configured with containerized of modular storage units (35) stored on an industrial working surface. Shown are 20ft tank containers (35) amounting in volume for what can be produced in ammonia in 60 days. The idea of containers as opposed to bulk is that is allows for good traceability if so desired. When producing solids such as aluminium or silicon, containers may prove much easier to load or unload than bulk, and both oxides and produce must be handled.

In one embodiment of a Navigating Wind Converter visible in Fig 3A it is configured with moving cranes (38) to move storage containers (35), connection containers (36) or technical chemical containers (37) to or from a fixed point on an industrial working surface where an external crane can lift them or deposit them. This is very useful for efficient unloading and loading when docking given the large dimensions and height of the craft.

In one embodiment of a Navigating Wind Converter visible in Fig 3A it is configured with a fluid tank (39) held immobile in main structure (1) to store produced or needed chemicals with respect to the utilisation of electrical energy. Shown is the volume of ammonia that could be produced in 60 days on the basis of 30 MW average.

In one embodiment of a Navigating Wind Converter visible in Fig 3A, it is configured with a controllable rotating cane (40) articulated on main structure (1) with hinge (41), said cane being configured with a flexible tube extending from it to be connectable to a reservoir on shore or on a ship, and connected an onboard reservoir (39) for loading or unloading fluid produce or raw materials.

## Claims

1. An unmoored floating wind turbine system comprising
- a connecting structure that bears one or more wind turbines, and
- at least three hulls or topological concentrations of buoyancy-force, wherein
the connecting structure is configured to transmit moments and forces between the at least three hulls and the one or more wind turbines, and
- at least two lifting surfaces, such as foils and/or keels and/or fins and/or hulls, wherein the at least two lifting surfaces have separately controllable orientations relative to the structure for controlling a course direction of the unmoored floating wind turbine system and for controlling a heading of the connecting structure independently from the course direction.

2. The unmoored floating wind turbine system according to claim 1, wherein the at least three hulls jointly span in both length and width at least 200 meters.

3. The unmoored floating wind turbine system according to claim 1 or 2, wherein
the at least three hulls comprise a first hull and a second hull, and wherein
the at least two lifting surfaces comprise a first lifting surface and a second lifting surface, wherein
the first hull and the second hull have separately controllable orientations relative to the structure, wherein
the first lifting surface is a surface of the first hull and the second lifting surface is a surface of the second hull.

4. The unmoored floating wind turbine system according to any of the preceding claims, further comprising
a controllable marine turbine that is configured to operate and generate electricity based on waterflow on one hand and also configured with controllable drag intensity on the other hand; the marine turbine being configured to generate electricity and affect the speed of the vessel though drag control.

5. The unmoored floating wind turbine system according to any of the preceding claims, further comprising
at least two marine turbines each placed in a direction of flow and at a distance of each other, configured to operate and generate electricity on one hand and configured with independently controllable drag intensity in the water, and controllable to affect the speed of the unmoored floating wind turbine system through their joint drag and controllable to simultaneously affect the heading of the connecting structure and the course direction of the unmoored floating wind turbine systemin the water through their drag difference.

6. The unmoored floating wind turbine system according to any of the preceding claims, further comprising
an additional lifting surface placed on a hull, and arranged to generate force in a substantially vertical direction when an orientation of water flow has an angle of attack with the lifting surface.

7. The unmoored floating wind turbine system according to any of the preceding claims including two wind-turbines, preferably large wind turbines, and having three main hulls resulting in a triangular craft with a, preferably large, distance between buoyant elements in relation to the waterplane dimensions of the said buoyant elements, including a truss structure connecting the three hulls and the said wind turbines, **characterised by** most of the weight of one given turbine being transmitted to one single hull through the truss elements.

8. The unmoored floating wind turbine system according to any of the preceding claims configured with controllable lift on an elevation rudder through rotation of either the totality or a portion of the surface of the elevation rudder.

9. The unmoored floating wind turbine system according to any of the preceding claims, where a marine turbine is configured to operate in thruster mode and generate thrust at the expense of using electricity rather than generate both drag and electricity to move the energy platform in a desired direction or orientation.

10. The unmoored floating wind turbine system according to any of the preceding claims, where a rear portion of a rudder shaped hull is left open to water ingress in order to generate lift but generate less buoyancy

11. The unmoored floating wind turbine system according to any of the preceding claims, wherein the system is a Small Waterplane Surface Hull, having a part underwater, and parts above water, where the parts above water have shorter chord length above a given height above water

12. The unmoored floating wind turbine system according to any of the preceding claims, wherein the system is a Small Waterplane Surface Hull, having a part underwater, and parts above, where the parts above water have openings or holes in the trailing edge sections facing the quartering waves to allow water ingress and break the water impacting force.

13. The unmoored floating wind turbine system according to any of the preceding claims, comprising hulls comprising controllable buoyancy chambers to allow water ingress or expulsion and jointly raise the full system to a height required to have a desired clearance between the sea surface and the structure of the system, for instance 25 m, or jointly lower the full system until its buoyancy originates from other elements than the hulls, for instance structure elements.

14. The unmoored floating wind turbine system according to any of the preceding claims, wherein an interface between hull and structure is equipped with a hinge around an axis having an horizontal component and is configured with a locking system, such as bolts, connecting the two parts of the hinge, said hinge being configured to rotate a sunk hull to rise to the water surface or higher without elevating the structure of the unmoored floating wind turbine system when the locking part is inactive.

15. The unmoored floating wind turbine system according to any of the preceding claims where the sunk hulls are configured with separately controllable buoyancy chambers at different distances from the rotation axis of the hinge, configured and controlled to pretension the locking system when a hull is in operational position through partial emptying of a chamber exerting its buoyancy force away from the hinge axis, and said buoyancy chambers being configured and controlled to actuate the hull to rotate upward towards the surface when the hinge is unlocked and such action is required.
